# EUROPEAN PATENT SPECIFICATION

(11) **EP 0 574 528 B1**
(45) Date of publication and mention of the grant of the patent: **02.10.1996**
(21) Application number: 92908606.4
(22) Date of filing: 04.03.1992
(51) Int. Cl.: F16D 3/20, F16D 3/205, F16C 31/04

(54) **ROLLER TRIPLAN CONSTANT VELOCITY UNIVERSAL JOINT**
TRIPODEN-UNIVERSALDOPPELGELENK MIT ROLLEN
JOINT UNIVERSEL A DOUBLE CARDAN EN TRIPODE

(30) Priority: 06.03.1991 US 665359
(43) Date of publication of application: 22.12.1993
(73) Proprietor: GKN Automotive Inc., Auburn Hills, MI 48326-2362 (US)
(72) Inventor: HAHN, Steven, Rochester, MI 48064 (US)
(74) Representative: Neumann, Ernst Dieter, Dipl.-Ing.
(86) International application number: US9201834
(87) International publication number: WO9215797

(56) References cited:
- FR-A- 2 554 528
- FR-A- 2 554 532
- FR-A- 2 592 106
- GB-A- 2 099 549
- US-A- 4 346 570
- US-A- 4 708 693
- US-A- 4 828 534
- US-A- 4 881 923

## Description

### BACKGROUND OF THE INVENTION

### 1. FIELD OF THE INVENTION

The present invention generally relates to a constant velocity universal joint of the kind specified in the generic portion of the independent claim for transmitting a constant rotational motion between two non-coaxial shafts.

### 2. DESCRIPTION OF THE PRIOR ART

Constant velocity ("CV") universal joints are well known in the art and are extensively used to translate rotational motion between a driving shaft and a non-coaxial driven shaft CV joints are desirable for their ability to deliver a uniform output rotational speed which does not vary with rotation of the linkage or with articulation between the driving and driven shafts. A typical example of such an application is the drive linkage between the transmission and front wheels of a front wheel drive car. Such linkages are not only inquired to have non-coaxial shafts between the transmission and the wheel for transmitting the engine power, but must also allow for extensive articulation between the drive shaft and the wheel for purposes of steering.

The CV universal joint of interest for purposes of the present invention is a particular form of tripod CV universal joint commonly referred to as a triplan CV joint. Triplan CV universal joints generally have an inner pint member housed within an annular shaped outer joint member. Conventionally, the outer joint member has three equally-spaced longitudinal lobes disposed upon its interior surface. The longitudinal lobes each form a pair of guideways. The inner joint member has three radially extending trunnions equally spaced about the inner joint member's axis of rotation. Each trunnion extends into a respective longitudinal lobe. Cooperating with each trunnion is a roller assembly which engages the adjacent pair of guideways corresponding to the longitudinal lobe within which the trunnion resides.

The feature that distinguishes the triplan roller assembly from roller assemblies of other similar CV joints, such as the tripod, is a pair of parallel planar side walls provided on opposite sides of each of the trunnions, as originally disclosed in U.S.-A-4,490,126. The planar side walls provide a bearing surface upon which a roller assembly can operate to carry the torsional loads of the joint while also reducing friction between the trunnion and the guideways.

Friction between the trunnion and the guideways is a particularly important concern for CV joints having the general trunnion construction recited above. Under typical operating conditions where the axes of the inner and outer joint members are non-coaxial, the trunnions are each at various angles with respect to the outer joint member's axis of rotation. During one complete revolution of the CV joint, each trunnion alternately makes on complete cycle of traversing a portion of the length of its respective guideway. The portion of the guideway traversed increases as the angle between the inner and outer joint members increases.

The rolling contact between the roller assembly, the trunnion, and the guideway is necessary to minimize frictional drag corresponding to the traversing of each trunnion across its respective guideway. Such cyclic drag would otherwise induce high fluctuations in the torque resistance of the inner joint member as seen at the driving shaft, and would consequently produce a non-uniform output speed to the inner joint member. Loss of efficiency would also result along with a destructive wear effect upon the members of the CV joint As a consequence, the rolling contact is a critical aspect of the triplan CV joint.

As noted above, the original triplan CV joint provided each of three trunnions with opposing parallel planar surfaces. Each roller assembly consisted of a number of small cylindrical rollers, or needles maintained within an elongated cage which circumscribed each trunnion. The needles provided axial rolling movement of the inner joint and trunnion relative to the outer joint when the inner joint member was angulated relative to the outer joint, or when the inner joint member was plunged axially toward the outer joint member.

However, the needles proved to be inadequate as a result of their tendency to slide rather than roll because the trunnion path was arcuate and not parallel to the needles' plane of rotation. In addition, friction between the needle ends and the retainer cage had an adverse effect on the efficiency of the CV joint

U.S.-A-4,741,723 typifies a more recent triplan CV joint in which the retainer cage and needles are replaced by opposing pairs of cages and ball guides, or shoes, each retaining a pair of spherical rollers, or balls. The shoes are journaled upon the spherical end of each trunnion, securely holding the balls against the planar guideway of the outer joint member. A wall located at the center of each shoe and between each pair of balls defines two separate ball raceways, one for each of the balls residing within that shoe. In effect, the wall dictates the rolling plunge length of the CV joint Once the ball traverses across the ball raceway and abuts against the wall, the ball is forced to slide against the shoe and the guideway through the remainder of the plunge.

in spite of the improvement seen with the later shoe and ball assembly, problems with the durability of this roller assembly have been noted. Of primary concern for purposes of this invention, excessive wear and stress cracking of the spherical balls are promoted by the single point contact of the spherical balls with the shoe's raceway and the outer member's planar surface.

US-Patent 4 828 534 to Orain describes another type of CV-joint with an arrangement of a multitude of elongated rollers being kept on raceways on a pair of shoes being in contact with each trunnion within each lobe. These elongated rollers are free to travel independently from each other within cage means and these cage means are free to tilt with respect to said raceways of said shoes. From this arrangement it may occur that the rollers of each multitude of rollers may adopt a reduced axial distance from each other and that the raceways being unfavourably tilted with respect to the rotational axes of said rollers, both causing additional friction. This means said elongated rollers when submitted to loads traverse to the longitudinal direction of said raceways, may roll with a tumbling axis of rotation, generating a mechanically unfavourable combination of rolling and sliding relative movements at the surface of said raceways.

Accordingly, it is an object of the present invention to provide a constant velocity universal joint of the kind specified having an improved efficient operation with a low plunging effort.

### SUMMARY OF THE INVENTION

According to the present invention, a constant velocity universal joint is provided with the features of the characterising portion of the independent claim, with preferred embodiments defined in the sub claims. The constant velocity universal joint comprises an outer member, an inner member, a predetermined number of shoes, and a pair of rollers associated with each shoe. The outer member has an internal cavity with a number of longitudinal lobes. The longitudinal lobes are equally spaced from each other and in relation to the outer member's axis of rotation. Each longitudinal lobe has a pair of opposing side walls. The opposing side walls define pairs of longitudinal guideways for the elongated rollers.

The inner member is centrally positioned within the outer member and has an axis of rotation independent from the axis of rotation of the outer member. The inner member has a predetermined number of trunnions corresponding in number to the number of longitudinal lobes. The trunnions extend radially in relation to the inner member's axis of rotation, and each is positioned within a respective longitudinal lobe between a pair of longitudinal guideways.

Each of the shoes has a surface in pivotal contact with a trunnion. On the side of each shoe opposite the trunnion there is disposed a longitudinal bearing surface. A pair of elongated rollers is positioned on each longitudinal bearing surface. Each pair of rollers also engages an adjacent longitudinal guideway associated with the trunnion upon which the roller and shoe is journaled. The rollers are oriented such that their axis of rotation is perpendicular to the longitudinal bearing surface. A cage maintains the roller perpendicular to and in contact with the longitudinal bearing surface. The rollers engage the adjacent longitudinal guideway and bearing surface such that line contact is maintained for promoting a uniform distnbution of dynamic loading along the entire axial length of the roller.

The line contact between the roller and both the longitudinal guideway and bearing surface is of particular importance for purposes of the present invention. Line contact inherently improves the durability of the roller by avoiding the higher stresses induced by the single point contact of the prior art. As a result, there is a reduction in the tendency for wear and stress cracking seen with spherics rollers. In addition, the line contact also improves the rolling action between the roller assembly and its corresponding guideway and shoe, thereby reducing the force required to stroke a trunnion along the length of its longitudinal lobe, known as the plunging effort. Thus, the present invention retains the advantages of the triplan shoe and roller assembly while also avoiding the inherent physical limitations of a spherical ball used as the roller element and improves on the efficiency of the CV joint.

It is a further advantage of this invention that such a triplan CV joint provide a roller that does not have the inherent physical deficiencies of one that relies on a point contact with the bearing surfaces.

It is still a further advantage of this invention that the roller and its bearing surfaces have mating geometrical surface contours for promoting a uniform distribution of dynamic loading along the entire axial length of the roller.

Other objects and advantages of this invention will be more apparent after a reading of the following detailed description taken in conjunction with the drawings provided.

### BRIEF DESCRIPTION OF THE DRAWINGS

Figure 1 is a diagrammatic representation of an operating environment which is a typical application for a triplan CV joint in accordance with a preferred embodiment of this invention;
Figure 2 is a partial cross-sectional view of a triplan CV joint in accordance with a preferred embodiment of this invention;
Figure 3 is a cross-sectional view along line 3-3 of the triplan CV joint of Figure 2; and
Figure 4 is a partial cross-sectional view along line 4-4 of the triplan CV joint of Figure 3.

### DETAILED DESCRIPTION OF THE PREFERRED EMBODIMENT

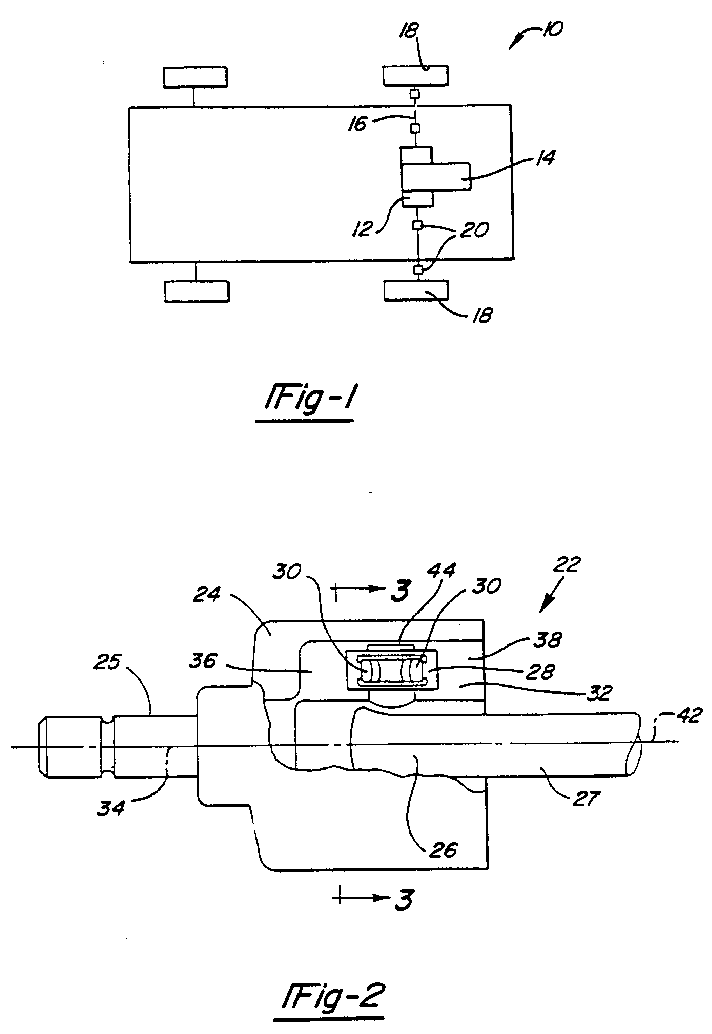

Figure 1 illustrates a typical operating environment which employs a triplan CV joint. A vehicle 10 is shown having a transmission 12 which is driven by a front-mounted engine 14. The transmission 12 drives a pair of half-shaft axies 16. The half-shaft axles 16 in turn drive their respective wheels 18 Use of some form of CV joint 20 is necessitated because the axis of the transmission 12 is not coaxial with the axes of the wheels 18 Utilization of the CV joint 20 ensures that the speed of each wheel 18 will be uniform and equal to the speed of the transmission 12 and the corresponding half-shaft axle 16.

In a preferred embodiment of this invention, a triplan CV joint 22, as shown in Figure 2, is provided which includes an annular outer member 24, an inner member 26 and three paris of shoes 28. Each shoe has a pair of elongated rollers 30. The outer member 24 is attached to a drive shaft 25 and has an internal cavity 32 which is coaxial with a drive axis of rotation 34 of the outer member 24. The internal cavity 32 has three longitudinal lobes 36 equally spaced about the drive axis of rotation 34, each of the longitudinal lobes 36 has a pair of opposing side walls defining a pair of longitudinal guideways 38.

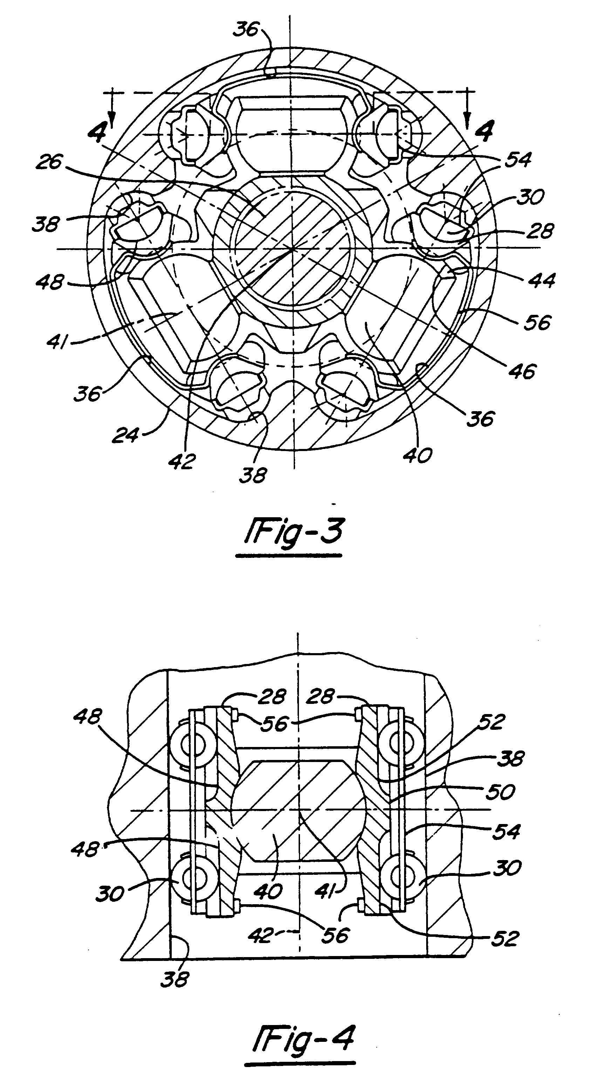

The inner member 26 is attached to a driven shaft 27, as more clearly seen in Figure 3, and has three radially extending trunnions 40 equally spaced about a driven axis of rotation 42 of the inner member 26. A distal end 44 of each trunnion 40 has a truncated spherical surface. As illustrated, the inner member 26 is disposed within the outer member 24 and each of the trunnions 40 is disposed within an associated longitudinal lobe 36 between a pair of guideways 38.

As shown in Figures 3 and 4, an oppositely disposed pair of shoes 28 pivotally contact each trunnion 40. Each shoe 28 has a truncated spherical surface 46 which corresponds to and mates with the spherical surface provided at the distal end 44 of the associated trunnion 40. On a surface opposite the truncated spherical surface 46 of the shoe 28 there is a longitudinal bearing surface 48 having a centrally disposed wall 50 which separates the bearing surface 48 into two raceways 52. Each of the two raceways 52 are engaged by an elongated roller 30.

Each elongated roller 30 engages its adjacent guideway 38 provided in the outer member 24. The elongated rollers 30 are oriented on each shoe such that its axis of rotation is perpendicular to the drive axis of rotation 34 of the outer member 24 and is pivotable about its associated trunnion 40 in a plane defined by driving an axis of rotation 42 and the axis of its associated trunnion 41. The advantage of having two opposing pairs of elongated rollers 30 is the dynamic stability provided by having two points of contact with each guideway 38.

As best seen in Figure 4, the elongated rollers are rotatably retained in the raceways 52 of the shoes 28 by a retainer cage 54 such that the distance between the axes of rotation of the two elongated rollers 30 associated with each shoe remains constant during operation. A preload cage spring 56, shown in Figure 3, provides a preload force biasing the two shoes 28 on opposite sides of each trunnion away from each other to assist in maintaining positive contact between the shoes 28, the elongated rollers 30 and the guideways 38.

According to a preferred aspect of this invention, an inventive feature is that the elongated roller 30, the raceways 52, and the guideways 38 each have mating geometrical contours which assure line contact between the mating surfaces. As seen in Figure 3, the contour of the elongated rollers 30 is preferably barrel-shaped for purposes of the present invention. Line contact is desirable for promoting a uniform distnbution of dynamic loading along the entire length of the elongated rollers 30, thus reducing the load per unit area that would otherwise accelerate wear and bearing failure.

In addition, a significant advantage of the present invention is that mating geometrical contours also assist in maintaining each elongated roller 30 on a linear path upon the guideway 38. The axis of rotation of the barrel-shaped elongated roller 30 remains constant, as opposed to a spherical roller which has a tendency to tumble or twist as a result of sideloading. Thus, the barrel-shape promotes a rolling action and minimizes any tendencies for sliding with the shoes 28 and the guideway 38.

Accordingly, the triplan CV joint 22 of the present invention is more durable and is highly efficient in view of the prior art. The triplan CV joint 22 is more durable because of the better load distribution of the barrel-shaped elongated rollers 30. The triplan CV joint 22 also promotes low internal friction by accentuating the rolling action and minimizing any sliding action between the elongated rollers 30 with their guideways 38 and raceway 52.

While the invention has been described in terms of a preferred embodiment, it is apparent that other forms could be adopted by one skilled in the art. Accordingly, the scope of the invention is to be limited only by the following claims.

## Claims

1. A constant velocity universal joint comprising:
an outer member (24) having an internal cavity (32) having a plurality of longitudinal lobes (36) equally spaced about a first axis of rotation (34), each of said plurality of longitudinal lobes (36) having a pair of opposing side walls, said opposing side walls defining a pair of longitudinal guideways (38);
an inner member (26) disposed within said internal cavity (32) of said outer member (24), said inner member (26) having a second axis of rotation (42), said inner member (26) having a plurality of trunnions (40) corresponding to said plurality of longitudinal lobes (36), said plurality of trunnions (40) extending radially in relation to said second axis of rotation (42), each of said plurality of trunnions (40) being disposed within a respective one of said plurality of longitudinal lobes (36) between said longitudinal guideways (38);
a shoe pair associated with each trunnion (40) of said plurality of trunnions, each shoe (28) of said shoe pair having a first surface (46) in pivotal contact with said associated trunnion (40), each shoe (28) of said shoe pair having a longitudinal bearing surface (48) on a surface opposite said first surface (46);
rollers disposed between said longitudinal bearing surfaces (48) of each shoe (28) and an adjacent longitudinal guideway (38), each roller (30) of said rollers rollingly engaging said longitudinal bearing surface (48) and said adjacent longitudinal guideway (38), each roller (30) of said rollers having an axis of rotation disposed crosswise at right angles to the longitudinal direction of said longitudinal bearing surface (48), each roller (30) of said rollers making line contact with said adjacent longitudinal guideway (38); and
a retainer cage (54) for retaining said roller axis of rotation of each roller (30) of said rollers disposed crosswise at right angles to said longitudinal direction of and in contact with said longitudinal bearing surfaces (48) such that the distance between the axes of rotation of two rollers (30) of said rollers associated with each shoe (28) remains constant during operation,
characterized in that
said rollers disposed between said longitudinal bearing surfaces (48) of each shoe (28) and an adjacent longitudinal guideway (38) are a single pair of rollers, wherein each roller (30) of said pair of rollers has a barrel-shaped surface contour and geometrical surface contours of said longitudinal bearing surfaces (48) and said longitudinal guideways (38) are in cross-section mating concave surfaces.

2. A constant velocity universal joint as claimed in Claim 1 wherein said plurality of longitudinal lobes (36) are three longitudinal lobes and said plurality of trunnions (40) are three trunnions.

3. A constant velocity universal joint as claimed in Claim 1 wherein each roller (30) of said pair of rollers with said longitudinal bearing surfaces (48) and said longitudinal guideways (38) having mating geometrical surface contours in cross-section for promoting a uniform distribution of dynamic loading along the axial length of each roller (30) of said pair of rollers.

4. A constant velocity universal joint as claimed in one of Claims 1 to 3, wherein each of said plurality of trunnions (40) has a spherical surface provided adjacent to its end and each shoe (28) of said plurality of shoe pairs has a truncated spherical surface (46) corresponding to and mating with said spherical surface of said trunnion (40).

5. A constant velocity universal joint as claimed in one of Claims 1 to 4 further comprising three preload cages (56), each preload cage of said three preload cages (56) biasing one pair of said three pairs of shoes (28) and their associated pairs of rollers (30) against said adjacent longitudinal guideways (38).

## Patentansprüche

1. Gleichlaufdrehgelenk umfassend:
ein Außenteil (24) mit einem Innenraum (32) mit einer Mehrzahl von gleichmäßig um eine erste Rotationsachse (34) verteilten längsverlaufenden Kammern (36), wobei jede der Mehrzahl der längsverlaufenden Kammern (36) ein Paar sich gegenüberliegender Seitenwände aufweist, wobei die genannten gegenüberliegenden Seitenwände ein Paar längsverlaufender Führungsbahnen (38) definieren;
ein Innenteil (26), das im genannten Innenraum (32) des genannten Außenteils (24) angeordnet ist, wobei das genannte Innenteil (26) eine zweite Rotationsachse (42) aufweist, wobei das genannte Innenteil (26) eine Mehrzahl von Zapfen (40) umfaßt, die der genannten Mehrzahl von längsverlaufenden Kammern (36) entsprechen, wobei sich die genannte Mehrzahl von Zapfen (40) radial zur zweiten Rotationsachse (42) erstreckt, wobei jeder der genannten Mehrzahl von Zapfen (40) jeweils innerhalb einer Kammer der Mehrzahl der längsverlaufenden Kammern (36) zwischen den genannten längsverlaufenden Führungsbahnen (38) angeordnet ist;
jeweils ein Paar Führungsschuhe in Zuordnung zu jedem Zapfen (40) der genannten Mehrzahl von Zapfen, wobei jeder Führungsschuh (28) des genannten Paares von Führungsschuhen eine erste Oberfläche (46) in Schwenkkontakt mit dem genannten zugehörigen Zapfen (40) aufweist, wobei jeder Führungsschuh (28) des genannten Paares von Führungsschuhen eine längsverlaufende Lagerfläche (48) auf einer Oberfläche aufweist, die der ersten Oberfläche (46) gegenüberliegt;
Rollen, die zwischen den genannten längsverlaufenden Lagerflächen (48) jedes Führungsschuhs (28) und einer benachbarten längsverlaufenden Führungsbahn (38) angeordnet sind, wobei jede Rolle (30) der genannten Rollen abrollend mit der genannten längsverlaufenden Lagerfläche (48) und der genannten benachbarten Längsführung (38) zusammenwirkt,
wobei jede Rolle (30) der genannten Rollen eine Rotationsachse aufweist, die kreuzend im rechten Winkel zur Längsrichtung der genannten längsverlaufenden Lagerfläche (48) liegt, und wobei jede Rolle (30) der genannten Rollen Linienkontakt mit der genannten benachbarten längsverlaufenden Führungsbahn (38) hat; und
einen Haltekäfig (54) zum Aufrechterhalten der genannten Rollen-Rotationsachse jeder Rolle (30) der genannten Rollen, die kreuzend im rechten Winkel zur genannten Längsrichtung der genannten längsverlaufenden Lagerflächen (48) steht, wobei die Rollen in Kontakt mit diesen stehen, so daß der Abstand zwischen den Rotationsachsen zweier Rollen (30) der genannten Rollen, die jedem Führungssschuh (28) zugeordnet sind, während des Betriebs konstant bleibt,
dadurch gekennzeichnet,
daß die genannten Rollen zwischen den genannten längsverlaufenden Lagerflächen (48) jedes Führungsschuhs (28) und einer benachbarten längsverlaufenden Führungsbahn (38) ein einzelnes Paar von Rollen sind, wobei jede Rolle (30) des genannten Paares von Rollen eine tonnenförmige Oberflächenkontur aufweist und geometrische Oberflächenkonturen der genannten längsverlaufenden Lagerflächen (48) und der genannten längsverlaufenden Führungsbahnen (38) im Querschnitt daran angepaßte konkave Flächen sind.

2. Gleichlaufdrehgelenk nach Anspruch 1,
wobei die genannte Mehrzahl von längsverlaufenden Kammern (36) drei längsverlaufende Kammern und die genannte Mehrzahl von Zapfen (40) drei Zapfen umfaßt.

3. Gleichlaufdrehgelenk nach Anspruch 1,
wobei jede Rolle (30) des genannten Paares von Rollen mit den genannten längsverlaufende Lagerflächen (48) und den genannten längsverlaufenden Führungsbahnen (38) im Querschnitt geometrisch aneinander angepaßte Oberflächenkonturen aufweist, um eine gleichförmige Verteilung der dynamischen Belastung entlang der axialen Länge jeder Rolle (30) des genannten Paares von Rollen zu fördern.

4. Gleichlaufdrehgelenk nach einem der Ansprüche 1 bis 3,
wobei jeder der genannten Mehrzahl von Zapfen (40) eine kugelige Oberfläche nächst seinem Ende aufweist und jeder Führungsschuh (28) der genannten Mehrzahl von Paaren von Führungsschuhen eine teilkugelige Innenfläche (46) aufweist, die der genannten kugeligen Oberfläche des genannten Zapfens (40) entspricht und mit ihr zusammenwirkt.

5. Gleichlaufdrehgelenk nach einem der Ansprüche 1 bis 4,
weiterhin umfassend drei Vorspannkäfige (56), wobei jeder Vorspannkäfig der genannten drei Vorspannkäfige (56) ein Paar der genannten drei Paare von Führungsschuhen (28) und ihre dazugehörigen Paare von Rollen (30) gegenüber den genannten benachbarten längsverlaufenden Führungsbahnen (38) vorspannt.

## Revendications

1. Joint universel homocinétique, comprenant :
un organe externe (24) ayant une cavité interne (32) comprenant un ensemble de lobes longitudinaux (36) régulièrement espacés autour d'un premier axe de rotation (34), chacun des lobes de cet ensemble de lobes longitudinaux (36) ayant deux parois latérales opposées, ces parois opposées délimitant deux guides longitudinaux (38),
un organe interne (26) disposé à l'intérieur de la cavité interne (32) de l'organe externe (24), l'organe interne (26) ayant un second axe de rotation (42), l'organe interne (26) ayant un ensemble de tourillons (40) correspondant à l'ensemble de lobes longitudinaux (36), les tourillons de l'ensemble de tourillons (40) étant disposés radialement par rapport au second axe de rotation (42), chaque tourillon de l'ensemble de tourillons (40) étant disposé de manière qu'un lobe respectif de l'ensemble de lobes longitudinaux (36) se trouve entre les guides longitudinaux (38),
une paire de patins associée à chaque tourillon (40) de l'ensemble de tourillons, chaque patin (28) de la paire de patins ayant une première surface (46) en contact pivotant avec le tourillon associé (40), chaque patin (28) de la paire de patins ayant une surface longitudinale (48) de portée placée sur une surface opposée à la première surface (46);
des galets disposés entre les surfaces longitudinales de portée (48) de chaque patin (28) et un guide longitudinal adjacent (38), chaque galet (30) coopérant par roulement avec la surface longitudinale (48) de portée et le guide longitudinal adjacent (38), chaque galet (30) ayant un axe de rotation orienté perpendiculairement à la direction longitudinale de la surface longitudinale (48) de portée, chaque galet (30) étant en contact linéaire avec le guide longitudinal adjacent (38), et
une cage (54) de retenue de galet pour retenir l'axe de rotation de chacun des galets (30) qui sont disposés en croix et perpendiculairement à ladite direction longitudinale des surfaces longitudinales (48) de portée et au contact de ces surfaces, si bien que la distance comprise entre les axes de rotation des deux galets (30) desdits galets associés à chaque patin (28) reste constante au cours du fonctionnement, caractérisé en ce que
les galets placés entre les surfaces longitudinales (48) de portée de chaque patin (28) et d'un guide longitudinal adjacent (38) sont sous forme d'une seule paire de galets, chaque galet (30) de la paire de galets a un profil de surface en forme d'olive, et les profils géométriques des surfaces longitudinales (48) de portée et des guides longitudinaux (38) sont des surfaces concaves complémentaires en coupe.

2. Joint universel homocinétique selon la revendication 1, dans lequel l'ensemble des lobes longitudinaux (36) comporte trois lobes longitudinaux et l'ensemble des tourillons (40) comporte trois tourillons.

3. Joint universel homocinétique selon la revendication 1, dans lequel chaque galet (30) de la paire de galets, les surfaces longitudinales (48) de portée et les guides longitudinaux (38) ont, en coupe, des profils formant des surfaces géométriques complémentaires destinées à favoriser une distribution uniforme des forces dynamiques suivant la longueur axiale de chaque galet (30) de la paire de galets.

4. Joint universel homocinétique selon l'une des revendications 1 à 3, dans lequel chaque tourillon de l'ensemble de tourillons (40) possède une surface sphérique adjacente à son extrémité, et chaque patin (28) de l'ensemble de paires de patins a une surface sphérique tronquée (46) correspondant à la surface sphérique du tourillon (40) et coopérant avec elle.

5. Joint universel homocinétique selon l'une des revendications 1 à 4, comprenant en outre trois cages (56) soumises à des charges préalables, chacune des trois cages (56) soumises à des charges préalables rappelant une paire parmi les trois paires de patins (28) et les paires associées de galets (30) contre les guides longitudinaux adjacents (38).
